# EUROPEAN PATENT SPECIFICATION

(11) **EP 4 230 905 B1**
(45) Date of publication and mention of the grant of the patent: **30.09.2026**
(21) Application number: 20957513.3
(22) Date of filing: 07.12.2020
(51) Int. Cl.: F16M 11/20, F16M 11/12, F16M 11/08, F16G 1/00, F16M 11/00, G03B 17/56

(54) **TIME-LAPSE PHOTOGRAPHING APPARATUS AND PHOTOGRAPHING METHOD THEREOF**
ZEITRAFFERFOTOGRAFIEVORRICHTUNG UND FOTOGRAFIEVERFAHREN DAFÜR
APPAREIL DE PHOTOGRAPHIE ACCÉLÉRÉE ET SON PROCÉDÉ DE PHOTOGRAPHIE

(30) Priority: 14.10.2020 CN 202011094279
(43) Date of publication of application: 23.08.2023
(73) Proprietor: Nantong Schmidt Opto-Electrical Technology Co., Ltd., Jiangsu 226500 (CN)
(72) Inventor: SUN, Yufeng, Nantong, Jiangsu 226500 (CN); LI, Daming, Nantong, Jiangsu 226500 (CN); ZHU, Xuefeng, Nantong, Jiangsu 226500 (CN)
(74) Representative: Eisenführ Speiser
(86) International application number: PCT/CN2020/134169
(87) International publication number: WO 2022/077739

(56) References cited:
- CN-A- 107 883 124
- CN-A- 108 488 566
- CN-A- 108 488 566
- CN-A- 108 700 250
- CN-U- 204 180 166
- CN-U- 205 690 018
- CN-U- 206 943 727
- CN-U- 210 687 572
- CN-U- 210 687 572
- DE-U1- 202005 006 620
- DE-U1- 202014 010 254
- US-A1- 2014 226 963
- US-A1- 2015 366 336

## Description

### Technical field

The present invention relates to the technical field of photography, in particular to a time-lapse photography apparatus and a photography method thereof.

### Background art

A conventional slide-rail time-lapse apparatus can only move left and right during capture, and the image that is captured and presented only has left and right displacement; moreover, displacement is only visible for close shots - the displacement effect is not obvious for long shots.

CN 210687572 U discloses a time-lapse photography apparatus comprising a stand and a belt-and-wheel transmission for generating controlled movement of a camera during photography.

### Summary of the invention

To solve the abovementioned technical problem, the present invention proposes a time-lapse photography apparatus and a photography method thereof, which solve the abovementioned technical problem.

A time-lapse photography apparatus, comprising a stand, a stand head, a support plate and a support seat; the stand head is mounted rotatably on an upper end of the stand, and a rotating seat is mounted on one side of the stand head in a manner allowing rotational drive; one end of the support plate is fixed to the rotating seat, and the support seat is mounted rotatably at the other end of the support plate by means of a rotation shaft; a peripheral outer side of the rotating seat is designed with a fixed wheel, the fixed wheel being fixed at one side of the stand head; one end of the rotation shaft passes through the support plate, and a moving wheel is then mounted thereon, the fixed wheel being connected to the moving wheel by means of a belt.

The stand is a tripod; the fixed wheel and the moving wheel are both toothed wheels or friction belt wheels, the fixed wheel being designed to have a hollow structure, with a front end of the rotating seat passing through the fixed wheel; and the fixed wheel is designed and mounted concentrically with a drive rotation shaft of the rotating seat.

An outer side of the rotating seat is designed with a slide groove; two inner sidewalls of the slide groove are inclined inward, and a mouth of the slide groove forms a narrowed-mouth shape; the support plate takes the form of a plate, with two sides of the support plate designed as inclined sloping faces; the sloping faces of the support plate have the same angle of inclination as the sidewalls of the slide groove, and the support plate is slidably mounted in the slide groove; a threaded hole is provided at one side of the slide groove, and a locking screw is mounted in the threaded hole, the locking screw being rotated into the threaded hole to lock and fix the support plate.

The number of teeth or diameter of the fixed wheel is greater than the number of teeth or diameter of the moving wheel.

The number of teeth or diameter of the fixed wheel is less than the number of teeth or diameter of the moving wheel.

The number of teeth or diameter of the fixed wheel is equal to the number of teeth or diameter of the moving wheel.

The support seat comprises a U-shaped seat, a transverse plate and a clamping seat; a bottom end of the U-shaped seat is mounted on an end part at the other end of the rotation shaft, one end of the transverse plate is fixed inside the U-shaped seat by means of a bolt and a lock nut in such a way as to be rotatably adjustable, and the clamping seat is mounted on the other end of the transverse plate.

A square slot is provided in the middle of one side at the bottom end of the U-shaped seat, and an end part of the transverse plate is designed with a limiting block; the limiting block may be positioned in the square slot.

A photography method for time-lapse photography, wherein one of the time-lapse photography apparatuses described above is used to perform the photography method;
first of all, an intelligent capture device is mounted on the support seat, and the stand head controls the rotating seat to rotate and drive the support plate to rotate synchronously;
the moving wheel on the support plate forms a cooperative relationship for transmission of motive power by means of the belt or a synchronous belt and the fixed wheel on the stand head, and at the same time, the moving wheel rotates on its own axis and simultaneously revolves around the fixed wheel;
the numbers of teeth or the diameters of the fixed wheel and the moving wheel may be configured to be different, such that the intelligent capture device forms different angles of rotation with the stand head; and
a lower end of the stand head can rotate on the upper end of the stand to cooperate with the rotating action of the rotating seat.

The intelligent capture device is a mobile phone or a tablet.

Advantages of the present invention:
1. In the present apparatus, the support plate is designed to move from the left side to the right side, and can thus achieve the goal of parallax in horizontal movement of a conventional time-lapse support plate.
2. Due to the fact that the support plate rotates, the intelligent capture device experiences a change in position in the vertical direction, the target captured by the camera has increased parallax in height, and the motion effect in the image is richer.
3. The moving wheel which moves in linkage is provided on the rotation shaft, and connected to the fixed wheel by means of the synchronous belt, the rotating seat drives the moving wheel to revolve by means of the support plate, while the fixed wheel is fixed to the stand head and does not move, and the moving wheel will rotate on its own axis on the synchronous belt; the intelligent capture device performs capture in a direct-facing manner, and different diameters or different numbers of teeth on the toothed wheels are used to create a speed differential, with the result that the rotating intelligent capture device, when rotating, will gradually tilt by a slight amount relative to the horizontal, producing a field rotation parallax effect.

### Brief description of the drawings

Fig. 1 is a first schematic drawing of the present invention.
Fig. 2 is a second schematic drawing of the present invention.
Fig. 3 is a third schematic drawing of the present invention.
Fig. 4 is a partial sectional schematic drawing of the support seat of the present invention.
Fig. 5 is a partial schematic drawing of the rotating seat of the present invention.
Fig. 6 is a partial schematic drawing of the support seat of the present invention.

### Detailed description of the invention

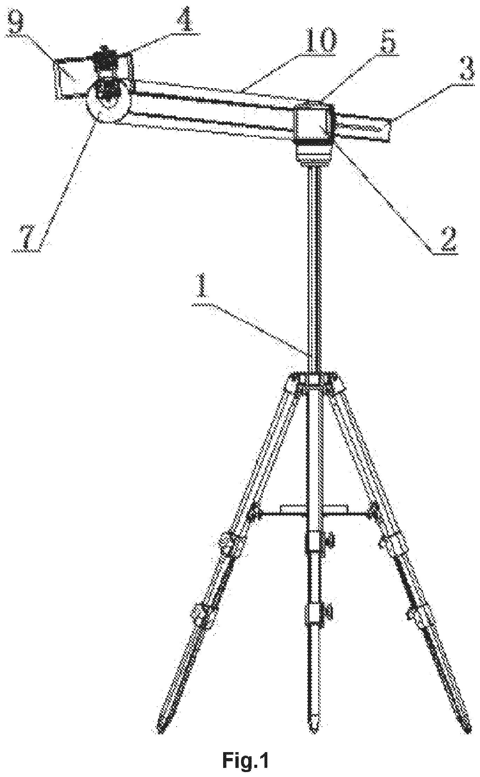

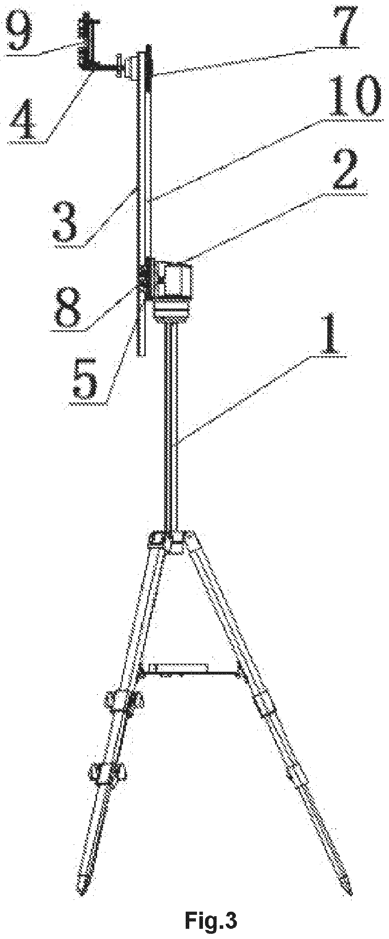

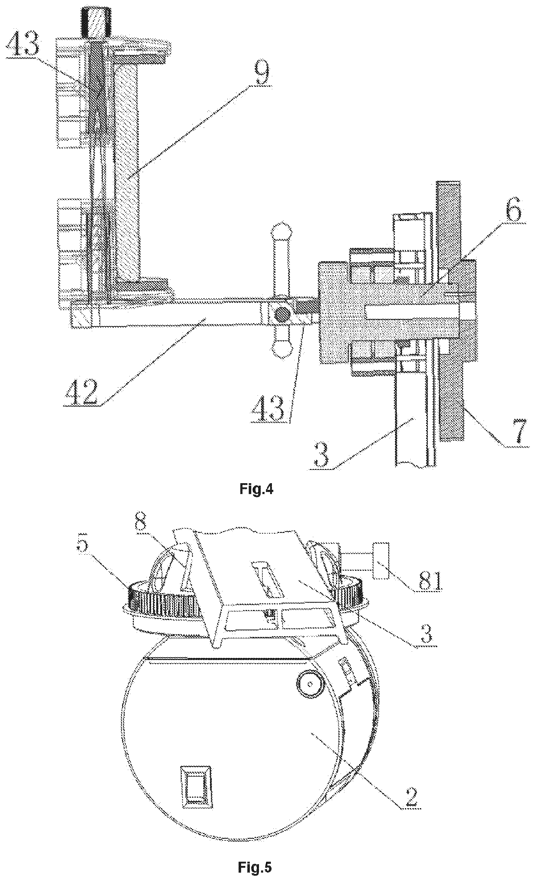

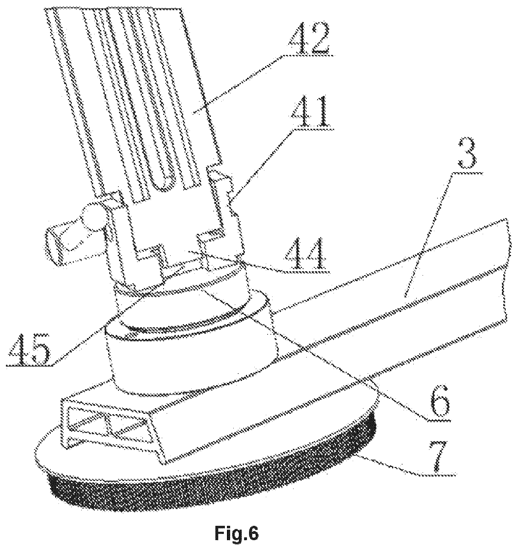

Referring to Figs. 1 - 6, a time-lapse photography apparatus comprises a stand 1, a stand head 2, a support plate 3 and a support seat 4. The stand head 2 is mounted rotatably on an upper end of the stand 1, and a rotating seat is mounted rotatably on one side of the stand head 2. One end of the support plate 3 is fixed to the rotating seat, and the support seat 4 is mounted rotatably at the other end of the support plate 3 by means of a rotation shaft 6. A peripheral outer side of the rotating seat is designed with a fixed wheel 5, the fixed wheel 5 being fixed at one side of the stand head 2. One end of the rotation shaft 6 passes through the support plate 3, and a moving wheel 7 is then mounted thereon. The fixed wheel 5 is connected to the moving wheel 7 by means of a belt 10.

The stand 1 is a tripod 1. The fixed wheel 5 and the moving wheel 7 are both toothed wheels or friction belt wheels, and the fixed wheel 5 is designed to have a hollow structure, with a front end of the rotating seat passing through the fixed wheel 5; and the fixed wheel 5 is designed and mounted concentrically with a drive rotation shaft of the rotating seat.

An outer side of the rotating seat is designed with a slide groove 8. Two inner sidewalls of the slide groove 8 are inclined inward, and a mouth of the slide groove 8 forms a narrowed-mouth shape. The support plate 3 takes the form of a plate, with two sides of the support plate 3 designed as inclined sloping faces. The sloping faces of the support plate 3 have the same angle of inclination as the sidewalls of the slide groove 8, and the support plate 3 is slidably mounted in the slide groove 8. A threaded hole is provided at one side of the slide groove 8, and a locking screw 81 is mounted in the threaded hole, the locking screw 81 being rotated into the threaded hole to lock and fix the support plate 3. The support plate 3 can be adjusted by sliding in the slide groove 8, to adjust the tension of the belt 10. The sloping design of the slide groove 8 is favorable for retaining the support plate 3.

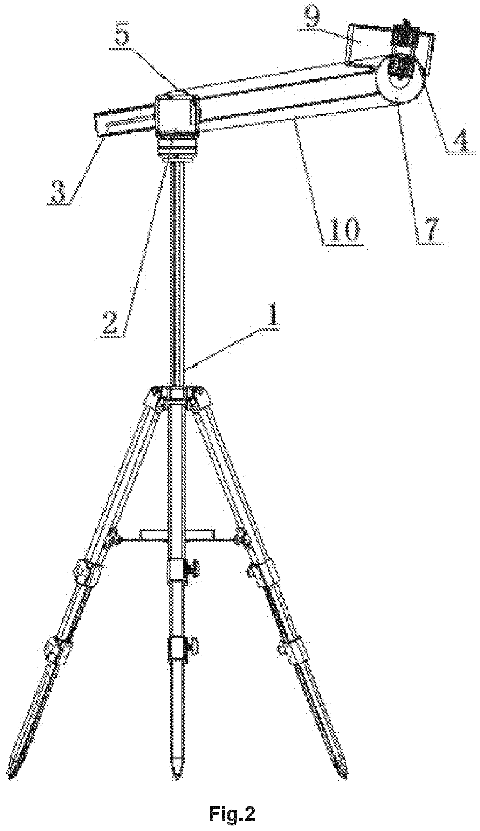

The number of teeth or diameter of the fixed wheel 5 is greater than the number of teeth or diameter of the moving wheel 7. The number of teeth or diameter of the fixed wheel 5 is less than the number of teeth or diameter of the moving wheel 7. When the numbers of teeth or the diameters are different, a given displacement by perpendicular rotation will give rise to a sense of motion with tilting through a certain angle in mobile phone capture (parallax). Fig. 2 is derived from Fig. 1, and it is shown and apparent in the two figures that a mobile phone rotates from the left side to the right side, the fixed wheel is fixed to the stand head so does not move, and the moving wheel rotates on its own axis under the action of a synchronous belt; because the numbers of teeth or the diameters are different, a speed differential arises, the angle of the mobile phone changes (lagging or advancing), and the capture angle thus inevitably changes, resulting in dynamic tilt parallax.

The number of teeth or diameter of the fixed wheel 5 is equal to the number of teeth or diameter of the moving wheel 7. When the numbers of teeth or the diameters are the same, there is no inclination effect, and this will ensure that the mobile phone remains in its original clamped state at all times.

The support seat 4 comprises a U-shaped seat 41, a transverse plate 42 and a clamping seat 43. A bottom end of the U-shaped seat 41 is mounted on an end part at the other end of the rotation shaft 6, one end of the transverse plate 42 is fixed inside the U-shaped seat 41 by means of a bolt and a lock nut in such a way as to be rotatably adjustable, and the clamping seat 43 is mounted on the other end of the transverse plate 42. A square slot 45 is provided in the middle of one side at the bottom end of the U-shaped seat 41, and an end part of the transverse plate 42 is designed with a limiting block 44; the limiting block 44 may be positioned in the square slot 45. The transverse plate 42 can be adjusted by rotation in the U-shaped seat 41, so as to change the angle of mobile phone capture, to meet the photographic requirements. The design of the limiting block 44 and square slot prevents over-adjustment of the transverse plate 42.

A photography method for time-lapse photography, wherein the time-lapse photography apparatus described above is used to perform the photography method;
first of all, an intelligent capture device is mounted on the support seat, and the stand head controls the rotating seat to rotate and drive the support plate to rotate synchronously; the moving wheel on the support plate forms a cooperative relationship for transmission of motive power by means of the belt or a synchronous belt and the fixed wheel on the stand head, and at the same time, the moving wheel rotates on its own axis and simultaneously revolves around the fixed wheel; the numbers of teeth or the diameters of the fixed wheel and the moving wheel may be configured to be different, such that the intelligent capture device forms different angles of rotation with the stand head; and a lower end of the stand head can rotate on the upper end of the stand to cooperate with the rotating action of the rotating seat. The intelligent capture device 9 is either a mobile phone or a tablet.

The following are designed inside the stand head 2: a housing, a built-in power supply, a control module, a horizontal rotation drive mechanism and a perpendicular rotation drive mechanism. The built-in power supply, control module, horizontal rotation drive mechanism and perpendicular rotation drive mechanism are all located within the housing, and the stand head 2 may also be connected to an external power supply; an electrical connection port on the control module is located on the housing, and the built-in power supply or external power supply supplies power to the control module, the horizontal rotation drive mechanism and the perpendicular rotation drive mechanism. A power-on switch is designed on the control module and located on the housing. A lower end of the horizontal rotation drive mechanism is drive-connected on the stand 1, and an outside output end of the perpendicular rotation drive mechanism is connected to a rear end of the rotating seat. The control module may have a wireless signal connection with an external mobile phone or computer, the mobile phone or computer remotely controlling the stand head 2, such that the stand head 2 performs a horizontal rotation and/or perpendicular rotation action, thereby driving a capturing mobile phone or other device to preform time-lapse photography. Perpendicular rotation drives the mobile phone to rotate from a lower region to an upper region, thus achieving vertical displacement, and move from the left side to the right side by rotating half a circle, thus achieving displacement in the left-right direction. During perpendicular rotation, if the fixed wheel 5 and the moving wheel 7 have different numbers of teeth or different diameters, the mobile phone will inevitably tilt through a certain angle in the course of moving from left to right, and the captured image will have a tilted effect. At the same time, horizontal rotation drives the entire mobile phone to rotate, so the dynamic range of capture is wider, and the displacement is obvious. During the perpendicular rotation action of this apparatus, the mobile phone is driven by rotation from the left side to the right side, then driven to perform a reverse action, rotating from the right side to the left side; by moving back and forth in this way, the special effect of vibration in the captured image will be achieved. Horizontal rotation is also horizontal rotation, and this back-and-forth action cooperates with the back-and-forth left-right movement described above, such that the sense of vibration in the image is better, and the captured region is broader.

## Claims

1. A time-lapse photography apparatus, **characterized in that** it comprises a stand (1), a stand head (2), a support plate (3) and a support seat (4); the stand head (2) is mounted rotatably on an upper end of the stand (1), and a rotating seat is mounted on one side of the stand head (2) in a manner allowing rotational drive; one end of the support plate (3) is fixed to the rotating seat, and the support seat (4) is mounted rotatably at the other end of the support plate (3) by means of a rotation shaft (6); a peripheral outer side of the rotating seat is designed with a fixed wheel (5), the fixed wheel (5) being fixed at one side of the stand head (2); one end of the rotation shaft (6) passes through the support plate (3), and a moving wheel (7) is then mounted thereon, the fixed wheel (5) being connected to the moving wheel (7) by means of a belt (10).

2. The time-lapse photography apparatus as claimed in claim 1, **characterized in that** the stand (1) is a tripod; the fixed wheel (5) and the moving wheel (7) are both toothed wheels or friction belt wheels, the fixed wheel (5) being designed to have a hollow structure, with a front end of the rotating seat passing through the fixed wheel (5); and the fixed wheel (5) is designed and mounted concentrically with a drive rotation shaft of the rotating seat.

3. The time-lapse photography apparatus as claimed in claim 1, **characterized in that** an outer side of the rotating seat is designed with a slide groove (8); two inner sidewalls of the slide groove (8) are inclined inward, and a mouth of the slide groove (8) forms a narrowed-mouth shape; the support plate (3) takes the form of a plate, with two sides of the support plate (3) designed as inclined sloping faces; the sloping faces of the support plate (3) have the same angle of inclination as the sidewalls of the slide groove (8), and the support plate (3) is slidably mounted in the slide groove; a threaded hole is provided at one side of the slide groove (8), and a locking screw (81) is mounted in the threaded hole, the locking screw (81) being rotated into the threaded hole to lock and fix the support plate (3).

4. The time-lapse photography apparatus as claimed in claim 1, **characterized in that** the number of teeth or diameter of the fixed wheel (5) is greater than the number of teeth or diameter of the moving wheel (7).

5. The time-lapse photography apparatus as claimed in claim 1, **characterized in that** the number of teeth or diameter of the fixed wheel (5) is less than the number of teeth or diameter of the moving wheel (7).

6. The time-lapse photography apparatus as claimed in claim 1, **characterized in that** the number of teeth or diameter of the fixed wheel (5) is equal to the number of teeth or diameter of the moving wheel (7).

7. The time-lapse photography apparatus as claimed in claim 1, **characterized in that** the support seat (4) comprises a U-shaped seat (41), a transverse plate (42) and a clamping seat (43); a bottom end of the U-shaped seat (41) is mounted on an end part at the other end of the rotation shaft (6), one end of the transverse plate (42) is fixed inside the U-shaped (41) seat by means of a bolt and a lock nut in such a way as to be rotatably adjustable, and the clamping seat (43) is mounted on the other end of the transverse plate (42).

8. The time-lapse photography apparatus as claimed in claim 7, **characterized in that** a square slot (45) is provided in the middle of one side at the bottom end of the U-shaped seat (41), and an end part of the transverse plate (42) is designed with a limiting block (44); the limiting block (44) may be positioned in the square slot (45).

9. A photography method for time-lapse photography, **characterized in that** the time-lapse photography apparatus as claimed in any one of claims 1 - 7 is used to perform the photography method;
first of all, an intelligent capture device (9) is mounted on the support seat (4), and the stand head (2) controls the rotating seat to rotate and drive the support plate (3) to rotate synchronously;
the moving wheel (7) on the support plate (3) forms a cooperative relationship for transmission of motive power by means of the belt (10) or a synchronous belt (10) and the fixed wheel (5) on the stand head (2), and at the same time, the moving wheel (7) rotates on its own axis and simultaneously revolves around the fixed wheel (5);
the numbers of teeth or the diameters of the fixed wheel (5) and the moving wheel (7) may be configured to be different, such that the intelligent capture device (9) forms different angles of rotation with the stand head (2); and
a lower end of the stand head (2) can rotate on the upper end of the stand (1) to cooperate with the rotating action of the rotating seat.

10. The photography method for time-lapse photography as claimed in claim 9, **characterized in that** the intelligent capture device (9) is a mobile phone, a tablet or a time-lapse camera.

## Patentansprüche

1. Zeitraffer-Fotografievorrichtung, **dadurch gekennzeichnet, dass** sie einen Ständer (1), einen Ständerkopf (2), eine Tragplatte (3) und einen Tragsitz (4) umfasst; der Ständerkopf (2) ist drehbar an einem oberen Ende des Ständers (1) angebracht, und ein Drehsitz ist an einer Seite des Ständerkopfs (2) in einer Rotationsantrieb ermöglichenden Weise angebracht; ein Ende der Tragplatte (3) ist an dem Drehsitz befestigt, und der Tragsitz (4) ist mittels einer Drehwelle (6) drehbar am anderen Ende der Tragplatte (3) angebracht; eine periphere Außenseite des Drehsitzes ist mit einem Festrad (5) ausgebildet, wobei das Festrad (5) an einer Seite des Ständerkopfs (2) befestigt ist; ein Ende der Drehwelle (6) durchsetzt die Tragplatte (3), und ein Bewegungsrad (7) ist dann darauf angebracht, wobei das Festrad (5) mit dem Bewegungsrad (7) mittels eines Riemens (10) verbunden ist.

2. Zeitraffer-Fotografievorrichtung nach Anspruch 1, **dadurch gekennzeichnet, dass** der Ständer (1) ein Stativ ist; das Festrad (5) und das Bewegungsrad (7) beide Zahnräder oder Reibriemenräder sind, wobei das Festrad (5) mit einer Hohlstruktur ausgebildet ist, wobei ein vorderes Ende des Drehsitzes das Festrad (5) durchsetzt; und das Festrad (5) konzentrisch mit einer Antriebsdrehwelle des Drehsitzes ausgebildet und angebracht ist.

3. Zeitraffer-Fotografievorrichtung nach Anspruch 1, **dadurch gekennzeichnet, dass** eine Außenseite des Drehsitzes mit einer Gleitnut (8) ausgebildet ist; zwei Innenseitenwände der Gleitnut (8) nach innen geneigt sind, und eine Mündung der Gleitnut (8) eine verengte Mündungsform bildet; die Tragplatte (3) die Form einer Platte hat, wobei zwei Seiten der Tragplatte (3) als geneigte Schrägflächen ausgebildet sind; die Schrägflächen der Tragplatte (3) den gleichen Neigungswinkel wie die Seitenwände der Gleitnut (8) aufweisen, und die Tragplatte (3) gleitend in der Gleitnut angebracht ist; eine Gewindebohrung an einer Seite der Gleitnut (8) vorgesehen ist, und eine Feststellschraube (81) in der Gewindebohrung angebracht ist, wobei die Feststellschraube (81) in die Gewindebohrung eingedreht wird, um die Tragplatte (3) zu verriegeln und zu fixieren.

4. Zeitraffer-Fotografievorrichtung nach Anspruch 1, **dadurch gekennzeichnet, dass** die Zähnezahl oder der Durchmesser des Festrads (5) größer ist als die Zähnezahl oder der Durchmesser des Bewegungsrads (7).

5. Zeitraffer-Fotografievorrichtung nach Anspruch 1, **dadurch gekennzeichnet, dass** die Zähnezahl oder der Durchmesser des Festrads (5) kleiner ist als die Zähnezahl oder der Durchmesser des Bewegungsrads (7).

6. Zeitraffer-Fotografievorrichtung nach Anspruch 1, **dadurch gekennzeichnet, dass** die Zähnezahl oder der Durchmesser des Festrads (5) gleich der Zähnezahl oder dem Durchmesser des Bewegungsrads (7) ist.

7. Zeitraffer-Fotografievorrichtung nach Anspruch 1, **dadurch gekennzeichnet, dass** der Tragsitz (4) einen U-förmigen Sitz (41), eine Querplatte (42) und einen Klemmsitz (43) umfasst; ein unteres Ende des U-förmigen Sitzes (41) an einem Endteil am anderen Ende der Drehwelle (6) angebracht ist, ein Ende der Querplatte (42) mittels eines Bolzens und einer Sicherungsmutter derart im Inneren des U-förmigen Sitzes (41) befestigt ist, dass es drehbar verstellbar ist, und der Klemmsitz (43) am anderen Ende der Querplatte (42) angebracht ist.

8. Zeitraffer-Fotografievorrichtung nach Anspruch 7, **dadurch gekennzeichnet, dass** in der Mitte einer Seite am unteren Ende des U-förmigen Sitzes (41) ein quadratischer Schlitz (45) vorgesehen ist, und ein Endteil der Querplatte (42) mit einem Begrenzungsblock (44) ausgebildet ist; wobei der Begrenzungsblock (44) in dem quadratischen Schlitz (45) positioniert werden kann.

9. Fotografierverfahren für Zeitraffer-Fotografie, **dadurch gekennzeichnet, dass** die Zeitraffer-Fotografievorrichtung nach einem der Ansprüche 1 bis 7 zur Durchführung des Fotografierverfahrens verwendet wird;
zunächst wird eine intelligente Erfassungsvorrichtung (9) am Tragsitz (4) angebracht, und der Ständerkopf (2) steuert den Drehsitz zum Drehen und treibt die Tragplatte (3) zum synchronen Drehen an;
das Bewegungsrad (7) an der Tragplatte (3) bildet mittels des Riemens (10) oder eines Synchronriemens (10) und des Festrads (5) am Ständerkopf (2) ein Kooperationsverhältnis zur Übertragung von Antriebskraft, und gleichzeitig dreht sich das Bewegungsrad (7) um seine eigene Achse und umläuft gleichzeitig das Festrad (5);
die Zähnezahlen oder die Durchmesser des Festrads (5) und des Bewegungsrads (7) können unterschiedlich konfiguriert werden, so dass die intelligente Erfassungsvorrichtung (9) unterschiedliche Drehwinkel mit dem Ständerkopf (2) bildet; und
ein unteres Ende des Ständerkopfs (2) kann sich am oberen Ende des Ständers (1) drehen, um mit der Drehbewegung des Drehsitzes zusammenzuwirken.

10. Fotografierverfahren für Zeitraffer-Fotografie nach Anspruch 9, **dadurch gekennzeichnet, dass** die intelligente Erfassungsvorrichtung (9) ein Mobiltelefon, ein Tablet oder eine Zeitraffer-Kamera ist.

## Revendications

1. Appareil de photographie en accéléré, **caractérisé en ce qu'**il comprend un pied (1), une tête de pied (2), une plaque de support (3) et un siège de support (4) ; la tête de pied (2) est montée de manière rotative sur une extrémité supérieure du pied (1), et un siège rotatif est monté sur un côté de la tête de pied (2) de manière à permettre un entraînement en rotation ; une extrémité de la plaque de support (3) est fixée au siège rotatif, et le siège de support (4) est monté de manière rotative à l'autre extrémité de la plaque de support (3) au moyen d'un arbre de rotation (6) ; un côté extérieur périphérique du siège rotatif est conçu avec une roue fixe (5), la roue fixe (5) étant fixée au niveau d'un côté de la tête de pied (2) ; une extrémité de l'arbre de rotation (6) passe à travers la plaque de support (3), et une roue mobile (7) est ensuite montée dessus, la roue fixe (5) étant reliée à la roue mobile (7) au moyen d'une courroie (10).

2. Appareil de photographie en accéléré selon la revendication 1, **caractérisé en ce que** le pied (1) est un trépied ; la roue fixe (5) et la roue mobile (7) sont toutes deux des roues dentées ou des roues à courroie de friction, la roue fixe (5) étant conçue pour avoir une structure creuse, avec une extrémité avant du siège rotatif passant à travers la roue fixe (5) ; et la roue fixe (5) est conçue et montée de manière concentrique avec un arbre de rotation d'entraînement du siège rotatif.

3. Appareil de photographie en accéléré selon la revendication 1, **caractérisé en ce qu'**un côté extérieur du siège rotatif est conçu avec une rainure de coulissement (8) ; deux parois latérales intérieures de la rainure de coulissement (8) sont inclinées vers l'intérieur, et une embouchure de la rainure de coulissement (8) forme une forme d'embouchure rétrécie ; la plaque de support (3) prend la forme d'une plaque, avec deux côtés de la plaque de support (3) conçus sous la forme de faces en pente inclinées ; les faces en pente de la plaque de support (3) ont le même angle d'inclinaison que les parois latérales de la rainure de coulissement (8), et la plaque de support (3) est montée de manière coulissante dans la rainure de coulissement ; un trou fileté est fourni au niveau d'un côté de la rainure de coulissement (8), et une vis de verrouillage (81) est montée dans le trou fileté, la vis de verrouillage (81) étant tournée dans le trou fileté pour verrouiller et fixer la plaque de support (3).

4. Appareil de photographie en accéléré selon la revendication 1, **caractérisé en ce que** le nombre de dents ou le diamètre de la roue fixe (5) est supérieur au nombre de dents ou au diamètre de la roue mobile (7).

5. Appareil de photographie en accéléré selon la revendication 1, **caractérisé en ce que** le nombre de dents ou le diamètre de la roue fixe (5) est inférieur au nombre de dents ou au diamètre de la roue mobile (7).

6. Appareil de photographie en accéléré selon la revendication 1, **caractérisé en ce que** le nombre de dents ou le diamètre de la roue fixe (5) est égal au nombre de dents ou au diamètre de la roue mobile (7).

7. Appareil de photographie en accéléré selon la revendication 1, **caractérisé en ce que** le siège de support (4) comprend un siège en forme de U (41), une plaque transversale (42) et un siège de serrage (43) ; une extrémité inférieure du siège en forme de U (41) est montée sur une partie d'extrémité à l'autre extrémité de l'arbre de rotation (6), une extrémité de la plaque transversale (42) est fixée à l'intérieur du siège en forme de U (41) au moyen d'un boulon et d'un écrou de verrouillage de telle manière à être réglable en rotation, et le siège de serrage (43) est monté sur l'autre extrémité de la plaque transversale (42).

8. Appareil de photographie en accéléré selon la revendication 7, **caractérisé en ce qu'**une fente carrée (45) est fournie au milieu d'un côté à l'extrémité inférieure du siège en forme de U (41), et une partie d'extrémité de la plaque transversale (42) est conçue avec un bloc de limitation (44) ; le bloc de limitation (44) peut être positionné dans la fente carrée (45).

9. Procédé de photographie pour la photographie en accéléré, **caractérisé en ce que** l'appareil de photographie en accéléré selon l'une quelconque des revendications 1 - 7 est utilisé pour réaliser le procédé de photographie ;
tout d'abord, un dispositif de capture intelligent (9) est monté sur le siège de support (4), et la tête de pied (2) commande le siège rotatif pour qu'il tourne et amène la plaque de support (3) à tourner de manière synchrone ;
la roue mobile (7) sur la plaque de support (3) forme une relation coopérative pour la transmission de puissance motrice au moyen de la courroie (10) ou d'une courroie synchrone (10) et de la roue fixe (5) sur la tête de pied (2), et en même temps, la roue mobile (7) tourne sur son propre axe et simultanément est en révolution autour de la roue fixe (5) ;
les nombres de dents ou les diamètres de la roue fixe (5) et de la roue mobile (7) peuvent être configurés pour être différents, de telle sorte que le dispositif de capture intelligent (9) forme différents angles de rotation avec la tête de pied (2) ; et
une extrémité inférieure de la tête de pied (2) peut tourner sur l'extrémité supérieure du pied (1) pour coopérer avec l'action rotative du siège rotatif.

10. Procédé de photographie pour la photographie en accéléré selon la revendication 9, **caractérisé en ce que** le dispositif de capture intelligent (9) est un téléphone mobile, une tablette ou un appareil photo en accéléré.
